# EUROPEAN PATENT APPLICATION

(11) **EP 4 679 487 A1**
(43) Date of publication of application: **14.01.2026**
(21) Application number: 25187149.7
(22) Date of filing: 03.07.2025
(51) Int. Cl.: H01J 47/00, G01T 1/185, H01J 47/06

(54) **PARTICLE DETECTOR OF THE MULTI-SITE TEPC TYPE**

(30) Priority: 12.07.2024 IT 202400016258
(71) Applicant: Istituto Nazionale di Fisica Nucleare, 00044 Frascati (RM) (IT)
(72) Inventor: BIANCHI, Anna, Frascati (RM) (IT)
(74) Representative: Metroconsult Srl

(57) **Abstract**

Described herein is a particle detector of the multi-site TEPC type, comprising a sensitive volume having a substantially cylindrical closed coaxial structure, in turn comprising:
a cathode (4) in the form of a wall surrounding said cylindrical structure,
an anode (7) in the form of a wire along the axis of said cylindrical structure,
at least one helix (3) having a cylindrical axial helical structure between said anode and cathode,
a power supply device adapted to supply power with a positive or negative voltage difference between said cathode and at least one helix, thereby determining, in the case of said positive voltage difference, a first electric field direction between said cathode and helix and at least one first coaxial particle collection volume between said anode and said at least one helix, or determining, in the case of said negative voltage difference, a second electric field direction between said cathode and helix and a second coaxial particle collection volume between said anode and said cathode, so that by only selecting a collection volume by changing said electric field direction it will be possible to modify a simulated site, allowing for multi-site characterization of the quality of the radiation field with a single detector during a single measurement session.

## Description

### Field of the invention

The present invention relates to a particle detector of the multi-site TEPC type, wherein between the anode and the cathode one or more helixes of conductive material are interposed, which define different coaxial collection volumes.

### Background art

The invention concerns the field of medical physics, and particularly that research branch of radiation physics which deals with the correlations between the physical quantities of a radiation field and the damage induced by them in biological systems.

It is known that different fields of ionizing radiation produce, the physical dose being equal, biological damage with different complexity, which is correlated with the spatial distribution of energy deposition, event by event, at subcellular level. It is also known that it is important to observe what happens at various scales of interest to take into account any damage accumulation on larger scales.

At present, the only quantity which is taken into account in proton therapy treatment plans is the dose, which is weighed with 1.1 biological effectiveness, i.e. considering protons to be more effective by 10% than treatments with photons along their entire trajectory in the patient. However, it is well known that their effectiveness decreases with their energy.

In order to progress towards treatment plans taking into account the variable radiation quality, practical instruments are needed which can measure physical quantities that can be correlated with biological effectiveness. In particular, instruments are needed which can validate radiobiology models of radiation effects on tissues that take into account the damage induced at various levels of interest, ranging from the individual chromosome to the whole cell nucleus.

Experimental microdosimetry allows measuring physical characteristics of the radiation field which are correlated with biological damage, and which can provide measurable model parameters.

Reference detectors are Tissue-Equivalent Proportional Counters (hereafter TEPCs), which, by measuring in low-density gas, simulate the amount of biological matter at subcellular sites. The term "biological site" refers to the target which is relevant to understand the correlation effects between induced damage and ionizing radiation (e.g. chromosome, DNA strand, cell nucleus, ...).

The fact that TEPCs are made of tissue-equivalent materials makes it possible to mimic the interaction with biological matter. Depending on the gas density selected in the detector, radiation-matter interaction can be mimicked at different simulated sites. The diameter of the simulated site is obtained by using the principle of simulation, if the mass stopping power ratio is one (gas density*actual detector diameter = tissue density *simulated site diameter), and corresponds to the biological tissue-equivalent diameter of the site chosen for the measurements.

Other detectors employed in microdosimetry are solid-state (silicon and diamond) detectors. At present, existing detectors cover several ranges of simulated sites of interest:
a) Standard TEPCs: 0.3 - 2 µm
b) Avalanche-confinement TEPCs: 25 - 300 nm
c) Solid-state detectors: 3 - 20 µm

As concerns the TEPCs listed in a) and b), the simulated site can be changed by changing the density, i.e. the pressure, within the detector; this is a time-consuming task, and can hardly be done within one measurement session. Solid-state detectors do not allow for any modification to their simulated site. Multi-site measurements at different simulated sites should be taken under the same irradiation conditions. No multi-site measurements have been taken so far with the same detector without changing the gas density.

The importance of multi-site measurements has become apparent in recent years, when it was realized that the correlation between biological damage and radiation field does not depend on the impact at a single biological site, but concerns multiple levels ranging from a single DNA-level lesion to clustered lesions at whole-nucleus level. These new multi-site radiobiological models could be used for taking biological effectiveness into account in clinical radiation treatment plans.

The need is felt, therefore, for implementing fast and quasi-simultaneous multi-site measurements that could allow validating new radiobiological models to correlate the energy deposition stochastics at different sensitive sites with the effect induced by ionizing radiation in terms of cell damage. The results could then be implemented in advanced treatment plans to obtain better tumour control during the therapy and minimize damage to healthy tissues.

No detectors are currently known which can take measurements in multiple simulated sites within a single measurement session. Until now, multi-site measurements have been conducted in two ways, always considering that the currently available detectors cover only a limited range of simulated sites. This means that no single detector exists which can cover every site of interest:
1) measurements with TEPC detectors and measurements in continuous gas flow, where pressure can be varied without having to wait for it to stabilize;
2) measurements using more than one detector at different pressures in the same session, or using solid states of different sizes, or taking measurements in different measurement sessions.

The former solution is not feasible because, for safety reasons, measurements cannot be taken in clinical structures with flowing gas (since the gas in use is propane, which is inflammable).

In the latter case, the use of multiple detectors at different pressures, or of identical detectors in different sessions, implies increased measurement uncertainty because of the different response functions of each detector, and also, when using identical detectors, because of positioning uncertainties along the beam profile. The measurement uncertainties that would result from this latter solution would exceed those that can be tolerated for clinical use of such detectors. The use of multiple detectors would also require the use of multiple acquisition systems, leading to higher costs; while multi-session measurements are not compatible with the need for obtaining a quality measurement on a daily basis along with the standard Quality Assurance processes.

### Summary of the invention

It is therefore the goal of the present invention to provide a particle detector of the multi-site TEPC type which can overcome the above-described problems.

The inventors found out that, in order to eliminate the limitations dictated by the currently known instruments for experimental microdosimetry, quasi-simultaneous measurements can be taken at at least two different sites without changing the detector and by only varying the electric field between the electrodes, without changing the pressure, thus solving the above-mentioned problems and providing a possibility for experimental validation of models introduced in innovative treatment plans.

The general idea of the invention is to build a particle detector of the multi-site TEPC type wherein between the anode and the cathode one or more helixes of conductive material are interposed, which can define different coaxial collection volumes.

According to the basic principle of operation of a TEPC, electrons produced by ionization of collection gas are collected at the anode. Pushed by the electric field, electrons move towards the anode until the avalanche process is triggered and the final number of collected electrons is proportional to the initial one, the proportionality factor being the gain of the detector.

Therefore, the subject of the invention essentially is, in a particle detector of the multi-site TEPC type, the conformation and operation of one or more helixes acting as intermediate electrodes for defining the volume for collecting electrons produced by ionization of collection gas.

By interposing an electrode (helix) between the anode and the cathode, it is possible to cancel the drift field between the cathode and the helix, so that the collection volume will be only the one within the helix. The helix is a conductive wire coaxially wound around the anode, at a constant distance therefrom. **In** this manner, without varying the pressure, by only selecting the collection volume by varying the electric fields between the electrodes, it is possible to modify the simulated site to obtain a multi-site characterization of the quality of the radiation field with a single detector in one measurement session.

TEPC detectors with a helix-shaped intermediate electrode are already in use in microdosimetry applications: they are avalanche-confinement detectors. In this case, the helix is only used to confine the electronic avalanche when low-pressure measurements are taken at simulated sites below 300 nm, which is the minimum limit that can be simulated with TEPCs without avalanche confinement. This is because, under this limit, a TEPC will operate correctly only if the electronic avalanche is confined within a region defined inside the sensitive volume to provide the required energy resolution; otherwise, due to low pressure, it will occupy too large a volume in the sensor. These detectors operate only in the configuration with a negative ΔV between the cathode and the helix. However, they have never been used with positive ΔV values for the purpose of using the helixes as intermediate electrodes for collection volume definition, as is the case in the present invention.

A publication by Bortot et al., 2017 (https://doi.org/10.1016/j.radmeas.2017.06.012) describes tests carried out with an avalanche-confinement detector. In this case, the helix used for confining the avalanche must be properly biased to clearly delimit the multiplication region also at very low gas pressures, but at the same time it should be prevented from causing much discontinuity in the electric field. In this article, an avalanche-confinement TEPC was designed which can take microdosimetric measurements in the range of 300 nm to 25 nm. In this work, in order to study the electric and geometric transparency of the grid, the voltage difference between the helix and the cathode was varied with negative ΔV points and just one positive ΔV point to find that region where external drift is sufficient to avoid ionization recombination, while also not being intense enough to create multiplication. Another goal was to identify that electric condition in which the grid was most transparent. The point with positive ΔV was just an extreme of the study, useful to notice a change in the detector's behaviour prior to investigating the region of interest with negative ΔV, and its purpose was not to cancel the external drift field and collect inside the internal region.

One innovative aspect of the detector according to the invention is that it exploits the three electrodes (cathode, helix, and anode) and their potential difference to obtain two different collection volumes at simulated sites in a ratio of at least 1: 10. The basic idea is, therefore, to collect inside the helix and to cancel the drift field between the helix and the cathode, when positive ΔV measurements are taken.

In a first variant only one helix is used, but other variants are also possible wherein multiple helixes can be inserted at predefined distances to obtain more than two simulated sites.

The detector of the invention allows, also due to its design specifications (electrode sizes and anode diameter, which differ from those of known TEPC detectors), investigating a wider range of simulated sites than is possible with known static-gas or avalanche-confinement detectors (0.3 µm - 2 µm and 0.025 µm - 1 µm, respectively) or solid-state detectors (3 µm - 20 µm).

The detector of this invention can cover a range of simulated sites of 0.1 µm - 20 µm.

A further application of the detector of the present invention concerns the possibility of discriminating the fragments produced by nuclear reactions during the interaction with biological matter. In fact, by selecting the collection in the internal volumes it is possible to collect only those fragments with a range exceeding the distance between the electrodes. This can be of interest in BNCT (Boron Neutron Capture Therapy), wherein the reaction of thermal neutrons with boron produces an alpha particle and a lithium ion with different ranges.

In order to better understand the microdosimetric spectrum, it is possible to choose to collect in the detector's internal volume only the product with the greatest penetration length, i.e. the one that can reach the volume defined inside the helix without stopping in the non-collection volume comprised between the cathode and the helix.

The present invention relates to a particle detector of the multi-site TEPC type as set out in claim 1.

Dependent claims 2 to 12 describe some preferred embodiments of the detector of claim 1.

All claims are intended as integral parts of the present description.

### Brief description of the drawings

Further objects and advantages of the present invention will become apparent in light of the following detailed description of an exemplary embodiment (and variants thereof) referring to the annexed drawings, which are merely supplied by way of non-limiting example, wherein:
Figure 1 shows a diagram of the operation of the detector according to the present invention, wherein the detector is represented in a sectional view;
Figures 2a, 2b, 2c show some sectional and non-sectional views of the sensitive volume of the detector according to the present invention; numbers and arrows identify the essential components of the invention, which will be described in the detailed description;
Figure 3a shows a 3D sectional rendering of the sensitive volume in the aluminium shell of the detector;
Figure 3b shows a 3D sectional rendering of the detector connected to the interface box, in turn connected to the front-end electronics;
Figures 4a, 4b, 4c show some magnified views of parts of the sensitive volume of the detector shown in Figure 2c;
Figures 5a, 5b show a cross-sectional view and, respectively, an internal lateral view of the sensitive volume of a detector with two concentric helixes.

In the drawings, the same reference numerals and letters identify the same items or components.

### Detailed description

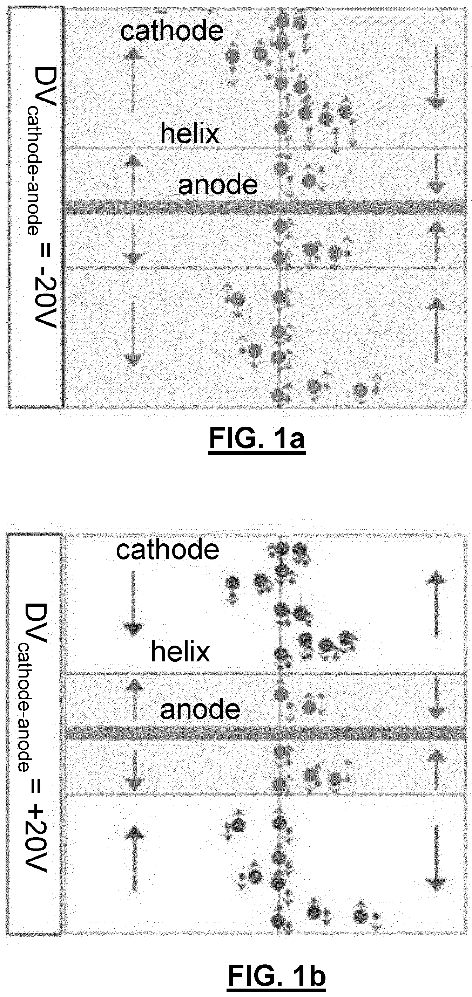

The principle of operation of the detector according to the invention is illustrated in Figures 1a, 1b, which show, by way of example, the longitudinal section of a single-helix detector. When the potential difference (ΔV) between the cathode and the helix is negative, the electrons produced by the ionizations created in the space between the two electrodes move towards the anode, avalanche when the electric field is sufficiently high, and are then collected at the anode; therefore, the sensitive volume is the whole internal volume comprised between the cathode and the anode, as highlighted in grey in Figure 1a. Conversely, when ΔV between the cathode and the helix is positive, the field between these two electrodes is inverted with respect to the preceding case, and the electrons created between the cathode and the helix move towards the cathode and are not collected at the anode, thus being lost signals; the only ionizations that avalanche and are collected at the anode are those occurring between the helix and the anode; therefore, collection occurs at the site with the smallest diameter enclosed by the helix, as highlighted in grey in Figure 1b.

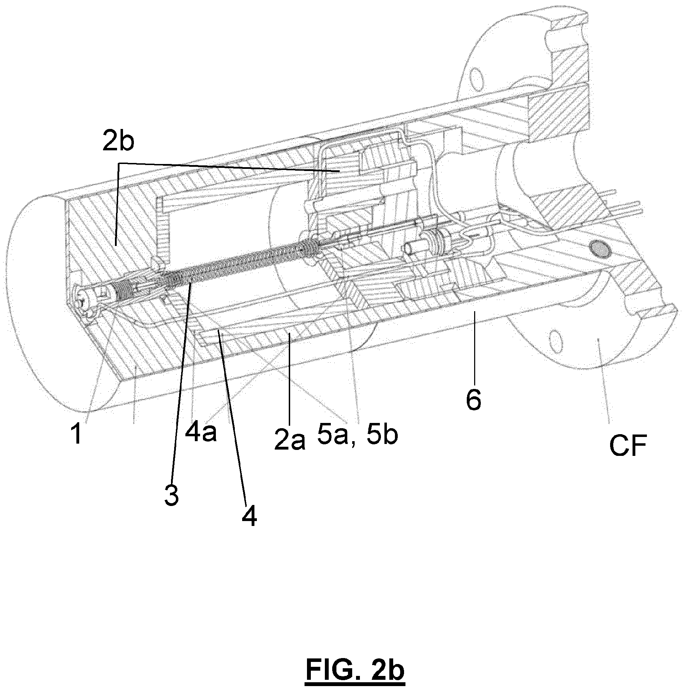

The detector of the invention is a multi-site TEPC detector having a coaxial cylindrical structure, with a cylindrical collection volume and electrodes consisting of an anode, at least one helix, and a cathode. Guard tubes are also included as electrodes. The electrodes constituted by the guard tubes are used to prevent any deformation in the electric field near the wire (they are designated by numeral 5 in Figure 2b).

In this coaxial arrangement, the cathode is external, the anode is internal, and the helix is positioned in between.

A first non-limiting embodiment of the detector described herein was built in coaxial cylindrical form with two coaxial collection sites, the diameter of which was sized in a ratio of 1:10. The smaller-diameter site (anode) is the one confined inside the helix, while the larger-diameter site is defined by the cathode and comprises the whole volume of the detector. This sizing of the detector's electrodes makes it possible to take measurements in a range of simulated sites from a minimum of 0.1 µm to a maximum of 20 µm.

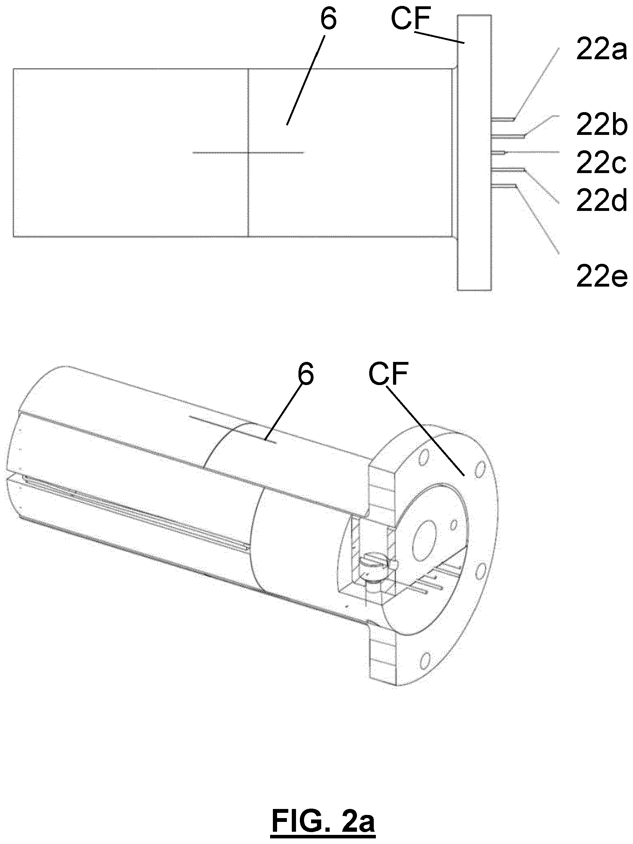

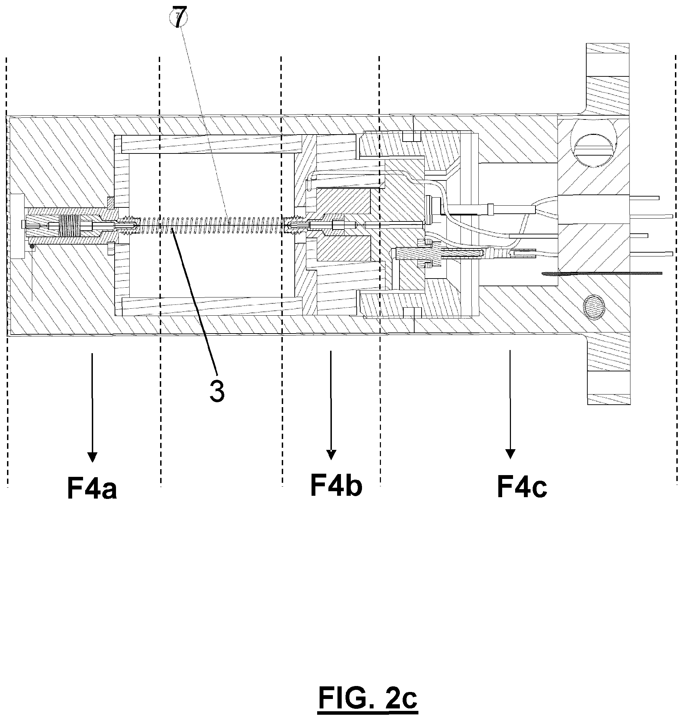

Figures 2a, 2b, 2c show several views of the technical drawings of the sensitive volume of the detector encapsulated into cases made of insulating plastic and aluminium. Only the details that will be described below are necessary for the invention to operate properly. All other components shown in the technical drawings relate to the engineering of the assembly procedure and the construction of the electric contacts.

Figure 2a shows (in a lateral view and a projection view) the sensitive volume of the detector encapsulated into the aluminium capsule 6. The sensitive volume is connected to the interface box (described below) through a flange CF, from which the wires (22a.....22e) for the electric contacts come out.

Figure 2b shows a sectional perspective view of the sensitive volume, highlighting the following elements identified by progressive numerals from 1 to 6 (the following dimensional values and materials are merely illustrative and non-limiting):
1 - Spring necessary for keeping the anode wire (inside the helix) under tension. The wire is made of gold-plated tungsten, preferably having a thickness of 25 µm to ensure a high gain at the pressures of interest;
2 - Shell made of Rexolite, which makes it possible to insulate the cathode under voltage from the external aluminium capsule 6, which is grounded. The lateral thickness (2a in Figure 2b) is 2 mm, while the top and bottom caps (2b in Figure 2b) are thicker to house the components necessary for mounting and fastening the wire and the helix.
3 - Helix preferably having a diameter of 2 mm, made of 100µm-thick gold-plated tungsten wire, with a coil pitch of 0.68 mm. The ends of the helix are wound around threaded Rexolite pins; the distance between the pins is 2 cm, and corresponds to the height of the sensitive volume. The operating voltages of the helix and the cathode are negative in a range of 500 to 1000 V, depending on the gain required for the measurements;
4 - Cathode made of A150 tissue-equivalent conductive plastic. It consists of a lateral cylinder, preferably having a thickness of 2 mm and a diameter of 2 cm, and two perforated circular caps (identified by numeral 4a in Figure 2b), which close the cylinder at its ends, preferably also having a thickness of 2 mm and a radius of 2 cm; the cathode is set to high negative voltage. The caps are also made of conductive plastic, and are supplied with the same voltage as the cylindrical A150 part, so as to improve the cylindrical symmetry of the electric field and the parallelism of the electric field lines at the extremities, thus preventing any edge effects;
5 - Guard tubes 5a, 5b that envelope both ends of the anode wire (7 in Figure 2c). They are made of aluminium, with a diameter around the anode wire 7, where they face the sensitive volume, of 100 µm. The anode passes through the guard tubes. The guard tubes are not electrically insulated from the anode wire because they are kept at the same voltage. In normal operating conditions, these electrodes and the anode are set to 0V.
6 - Aluminium capsule preferably having a thickness of 0.25 mm, with a flange CF for a vacuum-tight connection to an interface box, in turn connected to other elements of the detector, which are per se known. The aluminium capsule is as thin as possible to minimize the perturbations of the radiation field and the non-tissue-equivalent materials close to the collection volume.

Figure 2c shows another sectional view of the sensitive volume, wherein numeral 7 identifies the anode wire, which is more clearly visible in this drawing.

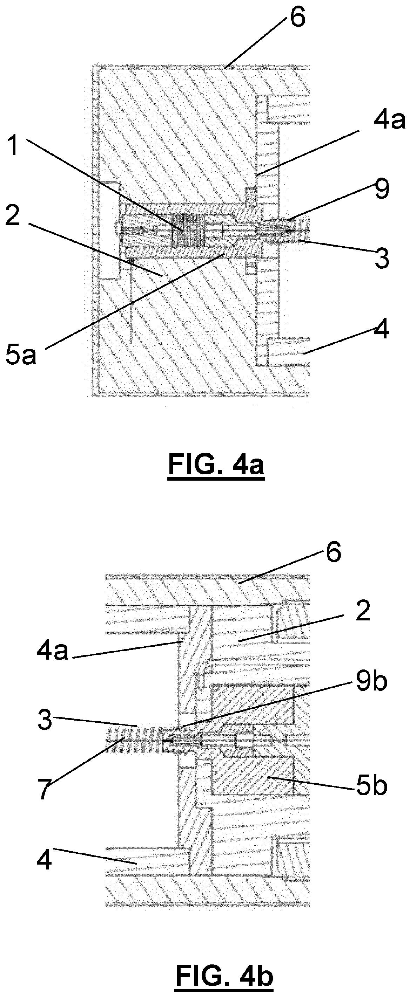

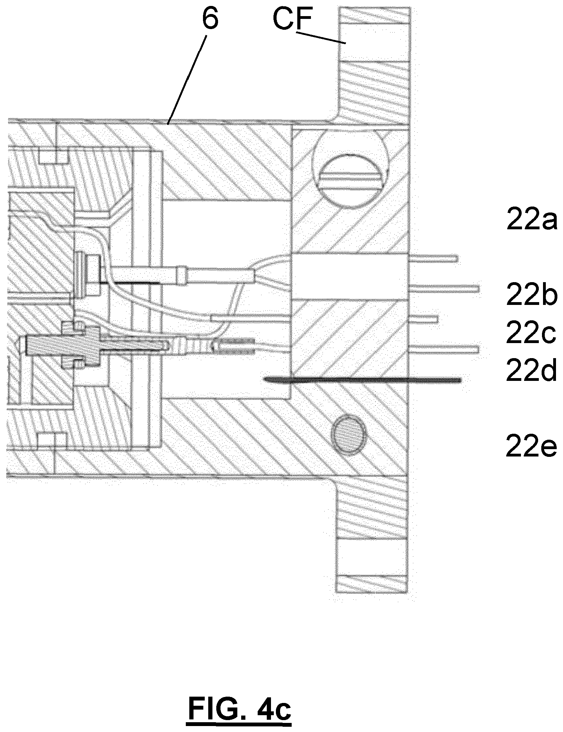

In Figure 2c references are also included to magnified views of parts of the sensitive volume of the detector, respectively shown in Figures 4a, 4b, 4c, which will be described below.

Further construction details will be described with reference to Figures 4a, 4b, 4c.

Such construction details are essential to build a detector according to the present invention. The size of the anode wire is very important to ensure a high gain and a wide range of operating pressures. The helix and cathode diameters were selected to preferably be in a ratio of 1:10 and operate within an optimal pressure range. In fact, the 2cm diameter of the cathode allows working at 20 mbar when 1 µm is simulated externally, and at 400 mbar when 20 µm is simulated externally. The pressure range of 20-400 mbar is optimal for maintaining both vacuum tightness and voltage tightness.

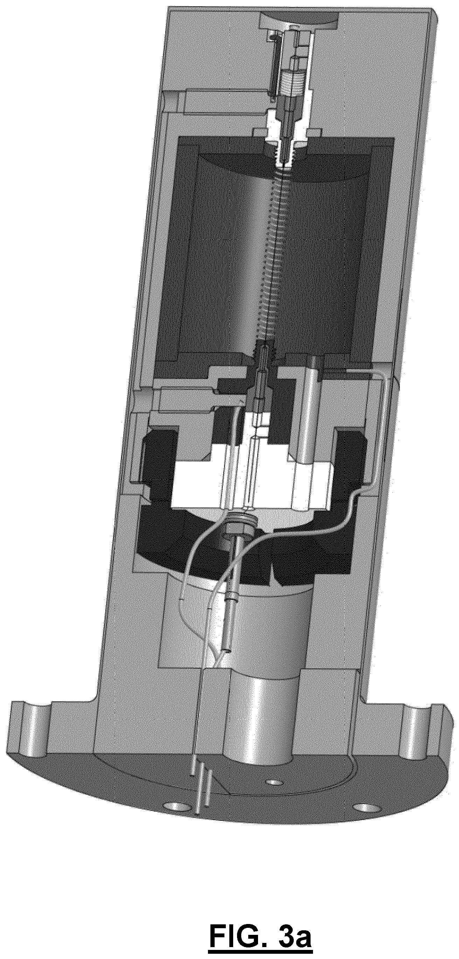

Figure 3a shows a 3D rendering of the sensitive volume (the same part shown in Figure 2b) in its vacuum-tight/low-pressure case with the flange to be connected to the interface box connected to the front-end electronics.

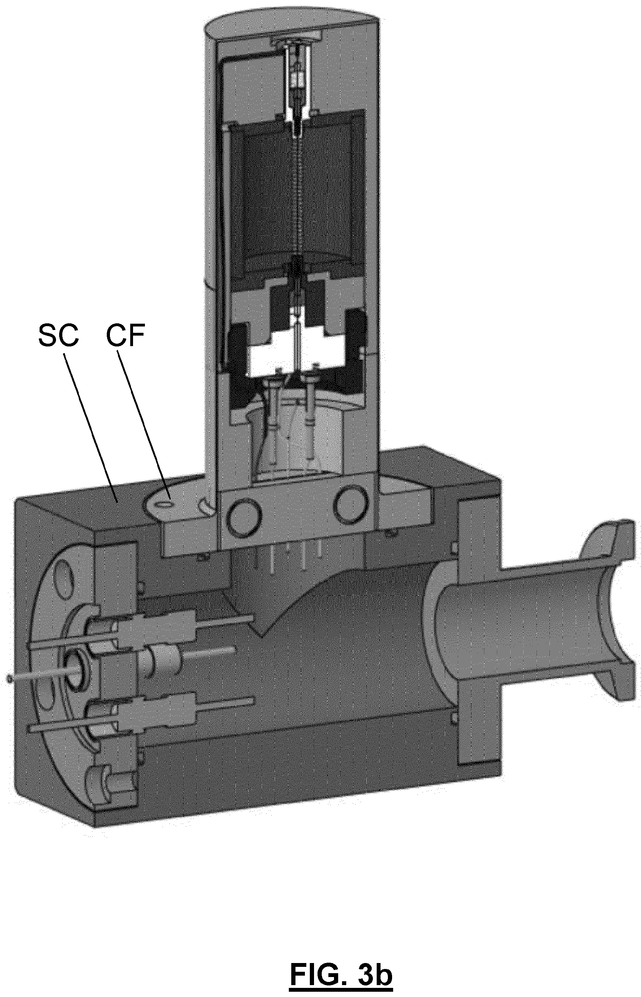

Figure 3b shows the sensitive volume connected, through the flange CF, to a vacuum-gas/air interface box SC acting as an interface to the front-end electronics. The inner volume of the box is used as a gas reserve and as a housing for the high-voltage and signal cables reaching a flange through four vacuum-type ceramic glands.

All components outside the sensitive volume are components conceived and designed to facilitate the detector assembly procedures. Such components should be considered as a complement to the engineering of the detector described herein, but being per se known, may be re-designed and conceived differently by a person skilled in the art, based on the description provided herein, to obtain a detector to be assembled differently and equipped with different electric connections, without any construction problem whatsoever.

The features necessary for the invention to be effective are those related to the sizing and power supply of the sensitive volume.

Further details of the sensitive volume will now be described with reference to Figures 4a, 4b, 4c, assuming a vertical disposition thereof in operation.

Figure 4a shows the part on top of the sensitive volume. Note the details of the spring 1 that keeps the anode under tension, the first guard tube 5, and the threaded pin 9 around which the helix 3 is wound.

Figure 4b shows the part under the sensitive volume. Note the details of the second guard tube 5 and the threaded pin 9b around which the helix 3 is wound. The threaded pin 9b, as well as the one designated as 9 in Figure 4a, is a novel feature of this detector. **In** known avalanche-confinement detectors, the helix is welded to a metal pin.

Figure 4c: this figure shows the base of the detector, whereat the power wires (22a.....22e) of the various electrodes arrive with pins to be connected to the wires that will supply power to the detector. Note also the vacuum-tight flange CF that connects the detector to the base box SC.

In the above-described embodiment there is only one internal collection volume with only one helix, but the number of coaxial helixes may be increased to obtain more than two collection volumes and more than two corresponding sites that can be investigated during one measurement session.

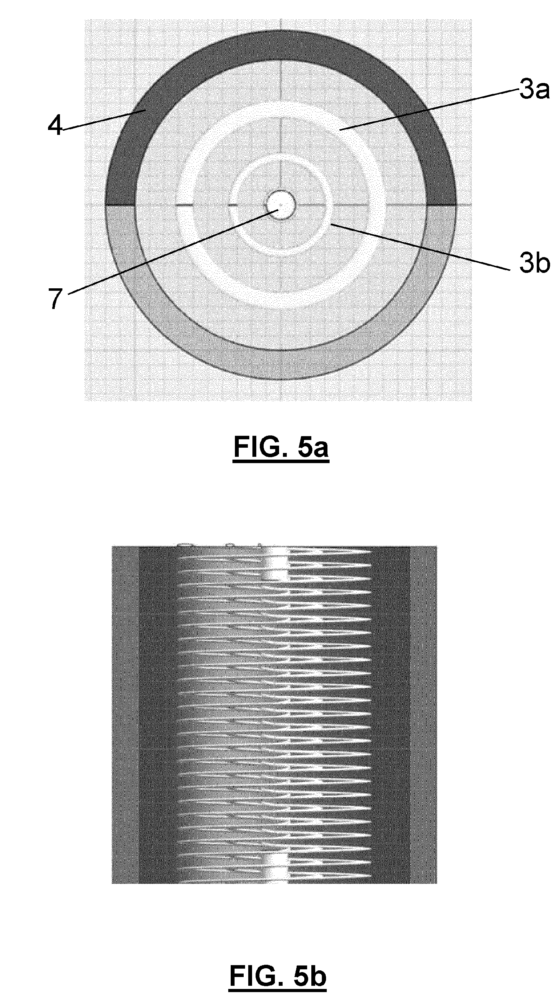

Figures 5a and 5b are schematic representations of a detector having two concentric helixes 3a and 3b, and hence more than two collection volumes. Figure 5a shows a sectional plan view, whereas Figure 5b shows a sectional front view.

Voltage is supplied to the electrodes by stabilized high-voltage modules that ensure that the selected value will be appropriately constant (< 2 mVpp). Depending on specific requirements, the voltage may be supplied to the detector either directly or via passive filters eliminating any parasite frequencies caused by the module, thus ensuring a lower noise level. Any voltage value supplied to the electrodes must be stable, otherwise a loss of detector resolution might ensue. The inventors observed that, for various pressures, the positive ΔV between the cathode and the helix for internal measurement is preferably 100V, while the negative ΔV between the cathode and the helix for external measurement is preferably -100V. The absolute voltage supplied to the cathode and the helix is, on the contrary, very variable and depends on the desired measurement gain, the noise conditions, and the pressure chosen for each measurement. However, for the collection volume selection mechanism to operate properly, the essential parameter is the ΔV between the cathode and the helix. This parameter is the one that permits the switching between the configuration shown in Figure 1a (ΔV=-100V) and the configuration shown in Figure 1b (ΔV=100V). Once the measurement configuration has been selected, the user will know, during the measurement, that in the former case the site will be the one with diameter "10", while in the latter case it will be the one with diameter "1". The ΔV value between the anode and the helix is the one that determines the gain of the detector. According to a preferred variant, the anode is set to 0V, and the value supplied to the helix varies between -500 V and -1000 V and depends on the pressure used during the measurement. The tissue-equivalent diameter value depends on the pressure chosen by the user.

Further possible dimensional values are given below by way of non-limiting example.
- Sizing (the anode diameter was selected to operate within a wide range of pressures, so as to be able to measure between 0.1 µm and 20 µm, while the diameters of the helix and the cathode were selected in a ratio of 1:10 to obtain two simulated sites on different scales of interest; confinement-type TEPCs usually have a helix whose radius is half that of the cathode)
- Use of the detector with positive cathode-helix ΔV for measuring an internal site
- Quasi-simultaneous multi-site measurements with one set-up and without varying the pressure.

All of the above dimensional values are preferred values, and a 10% variation from such values should be understood to fall within the scope of the present invention.

The above-described example of embodiment may be subject to variations without departing from the protection scope of the present invention, including all equivalent designs known to a person skilled in the art.

The elements and features shown in the various preferred embodiments may be combined together without however departing from the protection scope of the present invention.

In light of the above description, those skilled in the art will be able to produce the subject of the invention without introducing any further construction details.

## Claims

1. Particle detector of the multi-site TEPC type, comprising a sensitive volume having a substantially cylindrical closed coaxial structure, in turn comprising:
a cathode (4) in the form of a contouring wall of said cylindrical structure,
an anode (7) in the form of a wire along the axis of said cylindrical structure,
at least one helix (3) with a cylindrical axial helical structure between said anode and cathode,
a power supply device adapted to supply power with a positive or negative voltage difference between said cathode and at least one helix, thereby determining, in the case of said positive voltage difference, a first electric field direction between said cathode and helix and at least one first coaxial particle collection volume between said anode and said at least one helix, or determining, in the case of said negative voltage difference, a second electric field direction between said cathode and helix and a second coaxial particle collection volume between said anode and said cathode, so that by only selecting a collection volume by changing said electric field direction it will be possible to modify a simulated site, allowing for multi-site characterization of the quality of the radiation field with a single detector during a single measurement session.

2. Particle detector of the multi-site TEPC type as in claim 1, comprising multiple helixes (3a, 3b) concentric to said anode (7), so as to determine different collection volumes between said anode (7) and each one of said helixes, with different positive voltages between said anode and cathode.

3. Particle detector of the multi-site TEPC type as in claim 1 or 2, comprising guard tubes (5a, 5b) adapted to envelope the ends of said anode (7), said guard tubes being made of aluminium, with a diameter of 100 µm, and not being electrically insulated from said anode.

4. Particle detector of the multi-site TEPC type as in any one of the preceding claims, wherein said at least one helix (3) has a diameter of 2 mm and is made from 100µm-thick gold-plated tungsten wire, with a coil pitch of 0.68 mm.

5. Particle detector of the multi-site TEPC type as in any one of the preceding claims, wherein the ends of said helix (3) are wound around threaded Rexolite pins, the distance between said pins being 2 cm and corresponding to the height of the sensitive volume.

6. Particle detector of the multi-site TEPC type as in any one of the preceding claims, wherein said cathode (4) is made of A150 tissue-equivalent conductive plastic, and comprises a lateral cylinder having a thickness of 2 mm and a diameter of 2 cm and two perforated circular caps (4a) adapted to close said cylinder at its ends, said perforated circular caps (4a) having a thickness of 2 mm and a radius of 2 cm.

7. Particle detector of the multi-site TEPC type as in any one of the preceding claims, wherein the operating voltages of said helix (3) and said cathode (4) are negative in a range of 500V to 1000V.

8. Particle detector of the multi-site TEPC type as in any one of the preceding claims, wherein said anode is set to 0V, and the voltage value of said helix varies between -500V and -1000V and is pressure-dependent.

9. Particle detector of the multi-site TEPC type as in any one of the preceding claims, wherein the diameters of said helix and said cathode are in a ratio of 1:10.

10. Particle detector of the multi-site TEPC type as in any one of the preceding claims, wherein said positive voltage difference is 100V and said negative voltage difference is -100V.

11. Particle detector of the multi-site TEPC type as in any one of the preceding claims, wherein said anode (3) is a gold-plated tungsten wire having a diameter of 25 µm.

12. Particle detector of the multi-site TEPC type as in any one of the preceding claims, comprising a spring at one end of said anode, which is adapted to keep said anode under tension.

13. Particle detector of the multi-site TEPC type as in any one of the preceding claims, comprising a Rexolite shell around said cathode, and an external aluminium capsule (6) around said shell.
